# EUROPEAN PATENT SPECIFICATION

(11) **EP 0 631 864 B1**
(45) Date of publication and mention of the grant of the patent: **12.01.2000**
(21) Application number: 94107851.1
(22) Date of filing: 20.05.1994
(51) Int. Cl.: B32B 27/32, B65D 75/36

(54) **Compartmented package forming material formed from amorphous resin laminate sheet, and process and apparatus for preparing it**
Amorphes Polymerschichtstoffmaterial zur Herstellung von Mehrkammerverpackung, und Verfahren und Vorrichtung zu dessen Herstellung
Matériel pour la formation d'un emballage compartimenté formé à partir d'un stratifié en résine amorphe, procédé et dispositif pour sa préparation

(30) Priority: 21.05.1993 JP 14278093; 13.05.1994 JP 12440994
(43) Date of publication of application: 04.01.1995
(73) Proprietor: TAISEI KAKO CO., LTD.,, Osaka-shi 531 (JP)
(72) Inventor: Nishida, Hirotaka, Minoo-shi, Osaka 562 (JP); Nakata, Yasuo, Settsu-shi, Osaka 566 (JP)
(74) Representative: Hansen, Bernd, Dr. Dipl.-Chem.

(56) References cited:
- EP-A- 0 412 525
- EP-A- 0 461 273
- EP-A- 0 518 542
- EP-A- 0 524 802
- EP-A- 0 570 188
- DE-A- 2 754 425
- DATABASE WPI Week 9345, Derwent Publications Ltd., London, GB; AN 93-356895 (45) & JP-A-5 261 875 (IDEMITSU KOSAN CO LTD)

## Description

### FIELD OF THE INVENTION

The present invention relates to a material for forming a compartmented package in which a content encased therein can be protected and stored and from which the content can be easily taken out if necessary without using any special tool (i.e., so-called "PTP" or "Press-Through-Pack"). More particularly, the invention relates to a compartmented package forming material which is so shaped that the package can encase therein pellets or tablets, capsules for powders such as seasoning powder and medical powder, sweets such as candies and chocolates and paste-like materials such as jam, marmalade, glue and grease, which can protect and store the content for a long period of time in the state where the content can be easily observed from outside, and which per se can be formed into a package easily and can provide strong properties to endure various circumstances and transportations to the package. The invention also relates to a process for preparing the compartmented package forming material, an apparatus for preparing said material, a compartmented package forming laminate comprising said material and a liner layer, a process for preparing said laminate and an apparatus for preparing said laminate.

### BACKGROUND OF THE INVENTION

There has been commonly used such a compartmented package forming laminate that a content encased therein can be protected and stored and the content can be easily taken out therefrom if necessary without using any special tool (i.e., so-called "PTP" or "Press-Through-Pack"). As a PTP forming material to be provided with a shape for encasing a content, a polyvinyl chloride (abbreviated to "PVC") resin has been widely used, and the PVC has been predominant in various resins from the viewpoints of transparency and moldability or formability (easy to flow after melting and small shrinkage after molding). Accordingly, most of molding machines or forming machines generally prevailed are designed to process PVC.

In the use of PVC, however, various environmental problems which have been recently taken into serious consideration should be solved. Particularly when PTP made of PVC is incinerated, disposal of an exhaust gas is a serious problem. On that account, polyolefin (abbreviated to "PO"), particularly polypropylene (abbreviated to "PP"), has been paid much attention. Since any polyolefin contains no halogen such as chlorine, a problem regarding to the disposal of an exhaust gas caused by the incineration hardly takes place.

Among various polyolefins (PO), polypropylene (PP) is most predominant in view of transparency and moldability or formability. However, since the PP is a crystalline resin, it is rather low in the transparency. In addition, the molded article suffers large secondary shrinkage. These two drawbacks hinder a change of the PTP forming material from PVC to PO. In other words, it is almost impossible to mold PP in such a manner that a bad influence of occurrence of the large secondary shrinkage is hardly exerted, as far as the molding or forming machines now usually spread are used. Therefore, in the replacement of PVC with PP, the molding or forming machine must be changed, resulting in a high cost.

### OBJECT OF THE INVENTION

The present inventors have studied to pursue novel materials which are free from the above-mentioned restrictions accompanied by the use of PP, and they have found a novel material which is free from such restrictions to a considerable extent. However, as a result of further studies by the present inventors, single use of the novel material is yet insufficient in the practical requirements, and a further improvement is necessary. That is, the above-mentioned novel material is sufficient in transparency, heat resistance, moldability, impact resistance of the molded article at low temperatures and rigidity thereof, but it still has the following problems.
1. When the material is used singly to form a package, this material is insufficient in surface slippability. This causes an adverse effect that a tablet or the like to be encased does not smoothly enter into the encasing portion.
2. In the temperature region where the temperature of the molded article exceeds the glass transition temperature (Tg), the shape of the article can be hardly retained. This is a defect given by the fact that the material is amorphous, and this greatly restricts a heating temperature and a period of time for the forming process.

On the basis of the above views, the present inventors have further improved the novel material and provide surface layers made from a specific material on both surfaces of the layer made from the above-mentioned material in order to restrain distortion of the molded article caused by heat applied during the forming process. Thus, the present invention provides a compartmented package forming material composed of a laminate sheet, which comprises a substrate layer of an amorphous resin containing a ring whose constituent atoms form a molecular chain of the resin, and crystalline olefin resin layers laminated on both surfaces of the substrate via an adhesive, and which is provided with a shape for encasing contents, wherein each of the crystalline olefin resin layers constituting the laminate sheet has a thickness of 15 to 50 µm, and the laminate sheet has a total thickness of 100 to 400 µm, and wherein the package forming material is obtainable by laminating the crystalline olefin resin layers on both surfaces of the substrate, at least one of a substrate surface and a crystalline olefin resin layer surface being subjected to surface activation treatment immediately before the laminating stage. The novel material for constituting the compartmented package forming material of the invention may be other resin than the amorphous polycyclic copolymer described later, with the proviso that it is a low crystalline or amorphous resin containing constituents of a ring (ring structure), preferably those of a cycloalkane ring, in the molecular chain, and having the later-described various properties.

In practical use, it is necessary that at least any of a surface of the low crystalline or amorphous resin layer and an adhesive surface of the crystalline olefin resin surface layer, both layers constituting the compartmented package forming material of the invention, is subjected to a surface activation treatment to give hydrophilic properties to the surface (i.e., to activate the surface). However, when the amorphous resin layer is rolled up to form a rolled film or folded immediately after the surface activation treatment, it is very difficult to unroll the rolled film or unfold the folded sheet prior to the laminating stage. The reason is presumably that two layers contacted with each other in the rolled film or the folded sheet show a strong autohesion phenomenon.

For inhibiting or reducing the autohesion phenomenon, there has been conventionally used a method of interposing a non-adhesive layer between the two layers when the rolled film or the folded sheet is produced. However, as a matter of course, the layer thus interposed is required to be removed before the laminating stage, and hence use of the interposed layer is desired to be omitted. At present, the use of the interposed layer causes increased steps of the process, that is, productivity is obliged to be reduced.

For coping with the above problem, desired now is a process for preparing a compartmented package forming material in which an adhesive surface of the substrate is efficiently subjected to an activation treatment immediately before the surface layer is laminated on the substrate, not a long time before the laminating stage. Also desired is an apparatus for performing the above process.

### SUMMARY OF THE INVENTION

The present inventors have laminated layers made of a crystalline and slippable material on both surfaces of a substrate (central core layer) made of the above-mentioned novel material, and thereby the above two problems that slippability of the surface of the compartmented package forming material is insufficient and that the shape of the substrate cannot be held at temperatures higher than the glass transition temperature (Tg) are solved. Further, there can avoided difficulties in the unrolling or unfolding operation which are brought about when the sheet is rolled up or folded after the substrate surface is subjected to an activation (hydrophilic) treatment.

### [Novel materials for constituting laminates of the invention]

The optimum material as the above-mentioned novel material is a low crystalline or amorphous resin polymer, and according to Japanese Patent Laid-Open Publication No, 292601/1986, the novel material probably is a polymer containing an aliphatic condensed polycyclic structure unit represented by the following formula [1] in the molecular chain.

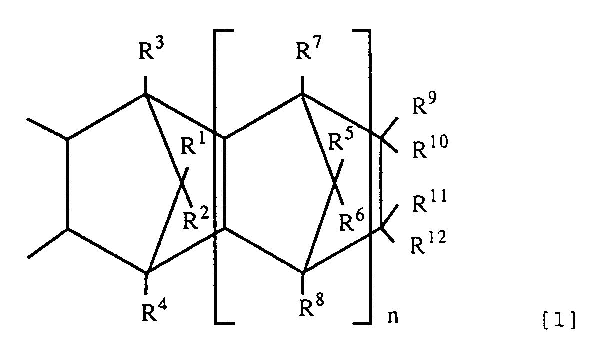

In the above formula, R¹ to R¹² are each independently a group selected from hydrogen, an alkyl group and a halogen, and they may be different from each other. At least one selected from R⁹ and R¹⁰ and at least one selected from R¹¹ and R¹² may together form a ring. n is not less than 0. When plural R⁵'s to R⁸'s are present (i.e., in the case of n ≥ 2), they may be different from each other.

According to the aforesaid publication, this novel material is construed a resin containing as a host component a copolymer of ethylene with an unsaturated aliphatic condensed polycyclic compound represented by the following formula [2].

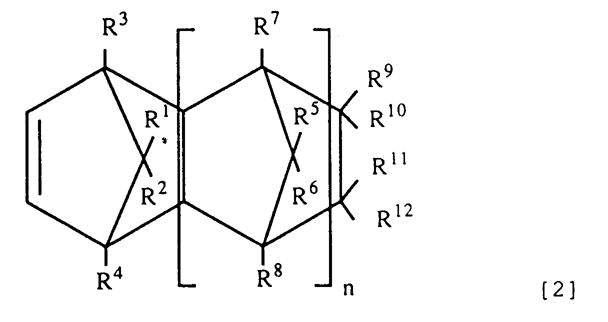

In the above formula, R¹ to R¹² are each independently a group selected from hydrogen, an alkyl group and a halogen, and they may be different from each other. At least one selected from R⁹ and R¹⁰ and at least one selected from R¹¹ and R¹² may together form a ring. n is not less than 0. when plural R⁵'s to R⁸'s are present (i.e., in the case of n ≥ 2), they may be different from each other.

In the present invention, a typical example of this novel material is recognized to be "amorphous polycyclic ethylene copolymer", and this amorphous polycyclic ethylene copolymer is sometimes abbreviated to "AMCEC" hereinafter.

The aforesaid publication describes that the novel material AMCEC for constituting the laminate sheet of the invention contains constituent units represented by the above formula [1] in an amount of not less than 2 molar %. This constituent unit is sometimes referred to as "formula [1] unit" hereinafter. The above publication also describes that when the comonomer unit is ethylene, a molar ratio of ethylene to the formula [1] unit is within the range of 5/95 to 95/5, preferably 40/60 to 90/10.

### [Physical property of AMCEC]

Intrinsic viscosity [η]: 0.1 - 2.0 dl/g, preferably 0.3 - 1.0 dl/g, (measured in a decahydronaphthalene solution at 135 °C)
Crystallinity: not more than 5 %, preferably 0 %, (measured by X-ray diffractometry)
Glass transition temperature (Tg): usually 40 - 220 °C, preferably 60 - 130 °C
Heat distortion temperature: usually 50 - 210 °C, preferably 55 - 125 °C
Refractive index (D²⁰_{D}): usually 1.47 - 1.58, preferably 1.50 - 1.56

### BRIEF DESCRIPTION OF THE DRAWING

Fig. 1 is a schematic vertical sectional view illustrating steps for preparing a laminate sheet which is a material to be provided with a shape for encasing a content.
Fig. 2 is a schematic vertical sectional view illustrating steps for providing a shape for encasing a content to the obtained laminate sheet.
Fig. 3a is a schematic partial sectional view showing a laminate sheet before provision of a shape for encasing a content; and Fig. 3b is a schematic partial vertical sectional view showing a shaped portion and the vicinity thereof after provision of the shape.
Fig. 4a is a schematic view of an apparatus for preparing a single-side laminate sheet for forming a compartmented package forming material, in which a corona discharge treatment means is incorporated; and Fig. 4b is a schematic view of an apparatus for preparing a compartmented package forming material of the invention, in which a means for conducting a corona discharge treatment on the surface of a single-side laminate sheet immediately before the remaining laminating stage is incorporated.

1: a substrate formed from an amorphous polycyclic olefin copolymer extruded from an extruder
2: a rolled film source for supplying a film for forming a surface layer of a laminate sheet
3: a member including both of a support roll or a press roll
4: a plug-assist compressed air forming apparatus
5: general term of plugs for forming a shape for encasing a content
6: a corona discharge treatment means
C: a shape for encasing a content
21: a surface layer-forming film delivered from a left side rolled film source
22: a surface layer-forming film delivered from a right side rolled film source
31: a support roll for laminating a surface layer-forming film delivered from a left side rolled film source on a central core sheet while supporting the surface layer forming-film from the left side
32: a press roll for press-laminating all layers together while pressing a surface layer-forming film delivered from a right side rolled film source onto the surface of the central core sheet
41: a cavity provided on the bottom of an upper forming mold of a plug-assist compressed air forming apparatus which provides a shape for encasing a content to a laminate sheet
51: a plug for forming a shape for encasing a content
52: a plug for forming a shape for encasing a content
61: corona discharged from a corona discharge treatment means
4u: an upper forming mold of a plug-assist compressed air forming apparatus
4d: a lower forming mold of a plug-assist compressed air forming apparatus
H: a contact heating plate
S: a laminate sheet
ES: a shaped laminate sheet
LS: an unshaped laminate sheet
AB3: a bearing for a press roll
AC3: an actuator for controlling a press roll
AC4: an actuator for controlling an up and down motion of a plug
PR3: a piston rod of an actuator for controlling a press roll
PR4: a piston rod of an actuator for controlling an up and down motion of a plug
PS4: a support member which is linked to a plug and pushes up or pulls down the plug
TR1: a turning roll
TR1: a turning roll
EXD: an extruder barrel for extruding a central core sheet

### DETAILED DESCRIPTION OF THE INVENTION

The laminate sheet which is a compartmented package forming material of the present invention is not composed of a single layer from the above-mentioned AMCEC but is a laminate in which each surface of the AMCEC layer is covered with a surface layer made from a crystalline olefin polymer.

In the process for preparing the package forming material of the invention, it is required that at least one of an adhesive surface of the substrate formed from the AMCEC and an adhesive surface of the surface layer formed from the crystalline olefin resin is subjected to an activation treatment immediately before the surface layer is laminated on the substrate.

Further, it is also required that at least one of a top surface of a layer which is formed from the package forming material of the invention and provided with a shape for encasing a content (so-called "pocket") and an adhesive surface of an amorphous resin sheet or a crystalline olefin resin sheet laminated on the pocket to seal up the opening of the pocket is subjected to an activation treatment immediately before the laminating stage. The top surface used herein is a plane portion present between the pockets and serves as an adhesive surface.

A process for manufacturing the laminate which is a package forming material of the invention and a layer structure of the laminate are described below with reference to the attached drawings.

### Description with reference to the drawings

### [Preparation of laminate sheet]

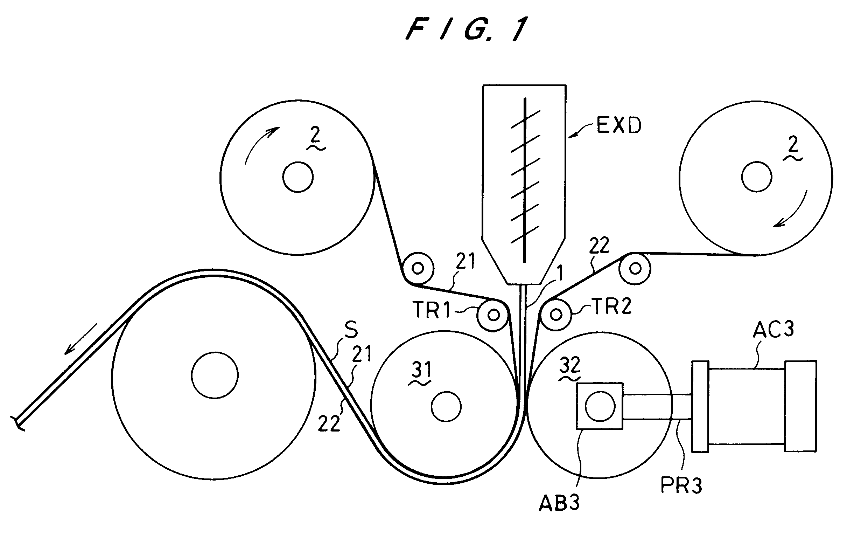

In Fig. 1, an AMCEC sheet 1 is extruded in the molten state from an extruder EXD shown on the upside of Fig. 1. Hereinafter, the words "upside", "downside", "right (side)" and "left (side)" are used for the convenience of description. Subsequently, on each surface of the AMCEC sheet 1 is laminated a crystalline PP layer and they are adhered together. In general, the lamination and adhesion are carried out by means of a dry lamination. One of the crystalline PP layers is supplied as a layer 21 from a left side rolled film source 2 shown on the left side of the extruder EXD, and the layer 21 is allowed to turn downward by means of a left side turning roll TR1. Then, the layer 21 is laminated on the left side surface of the AMCEC sheet 1 extruded from the extruder EXD while contacting a support roll 31 shown on the downside of Fig. 1. The other of the crystalline PP layers is supplied as a layer 22 from a right side rolled film source 2 shown on the right side of the extruder EXD , and the layer 22 is allowed to turn downward by means of a right side turning roll TR2. Then, the layer 22 is laminated on the right side surface of the AMCEC sheet 1 under pressure by means of a press roll 32 which is positioned on the lower right side of Fig. 1. A rotating shaft of the press roll 32 is borne by a bearing AB3 which is fixed to the left end of a piston rod PR3, and the right half of the piston rod PR3 is linked to a piston (not shown) present in an actuator AC3. The piston is driven by a proper means, for example, oil pressure, water pressure, air pressure, etc. As a result, a laminate sheet S is obtained.

The laminate sheet S thus obtained comprises the AMCEC layer as the central core layer and the crystalline PP layers laminated on the upper and the lower surfaces of the AMCEC layer as the surface layers 21 and 22. In general, the laminate sheet S is stored, transported and supplied in the form of an unrolled laminate sheet.

### [Provision of shape C for encasing content (tablets, etc.)]

The laminate sheet S can be provided with a shape C for encasing a content by a proper means such as vacuum forming, compressed air forming, vacuum and compressed air forming, etc. Prior to carrying out these forming processes, the laminate sheet S may be heated by a heating means H if necessary.

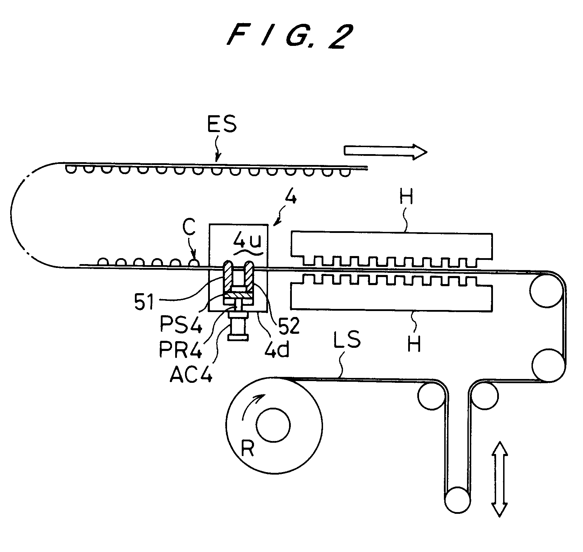

In Fig. 2, an unshaped laminate sheet LS delivered from a rolled sheet source R passes through various rolls according to necessity, and the sheet is then heated from the upper and lower sides by means of a contact heating plate H arranged on both sides of the sheet to heat the sheet to a temperature at which forming of the sheet is possible. The unshaped laminate sheet LS heated to a given temperature is then shaped by means of a plug-assist compressed air forming apparatus 4 positioned on the downstream side (left side in Fig. 2), to form a shape C for encasing a content (tablets, granules, powder medicine, etc.).

The plug-assist compressed air forming apparatus 4 is constructed as follows.

An upper half part (upper forming mold) 4u of the apparatus 4 is a female forming mold and has a predetermined number of cavities 41 at predetermined position(s) to provide a shape C for encasing a content to the unshaped sheet. The lower half part (lower forming mold) 4d of the apparatus 4 has a vacant portion inside thereof and within the vacant portion the following members are equipped.

A predetermined number of plugs 5 is equipped at the predetermined position(s). If there are plural plugs, they are sometimes numbered as 51, 52 ---, hereinafter. A support member PS4 is linked to the plug 5 and serves to push up or pull down the plug 5. A piston rod PR4 to bring up or down the support member PS4 and a piston (not shown) to drive the piston rod PR4 are encased in an actuator AC4. The piston in the actuator AC4 can be driven by an appropriate hydraulic means such as water pressure, oil pressure, air pressure or nitrogen gas pressure.

The unshaped laminate sheet LS having been conditioned to be in a given state is then provided with a shape C for encasing a content in the following manner.

The unshaped laminate sheet LS is interposed between the upper forming mold 4u and the lower forming mold 4d, and then when the actuator AC4 is set in motion, the piston rod PR4 rises to push up the support member PS4 engaged at the upper end of the piston rod PR4. As a result, the plugs 51 and 52 fixed on the top of the support member PS4 are raised to put the unshaped laminate sheet with their heads into the cavities 41 of the upper forming mold 4u, whereby a shape C for encasing a content can be provided to the unshaped laminate sheet. Subsequently, when the actuator AC4 is again set in motion to bring down the piston rod PR4, the plugs 51 and 52 are also brought down. Then, the upper forming mold 4u is raised, and a shaped laminate sheet ES is transferred to the downstream side of the plug-assist compressed air forming apparatus 4. The above-mentioned operations are repeated in accordance with given procedures, whereby a continuous laminate sheet ES having a desired shape for encasing a content can be obtained.

In some cases, the shaped portion of the laminate sheet ES suffers thin wall (nonuniformity of thickness) caused by putting the unshaped laminate sheet LS into the cavity 41 of the upper forming mold 4u. This phenomenon tends to occur in the case of using a polymer of low flowability, but in the case of the amorphous resin such as AMCEC used in the invention, occurrence of the nonuniformity of thickness does not matter.

For bonding each layers constituting the laminated sheet S of the invention, any appropriate means can be utilized. For example, an adhesive sheet may be interposed between the layers during the lamination stage, or an adhesive may be applied onto a surface of any of the layers prior to the lamination stage. When a viscous adhesive is used as the adhesive to bond the layers, each of the upper and lower surfaces of the amorphous resin layer 1 extruded from the extruder EXD is brought into contact with an adhesive application roll (not shown) prior to laminating any of the surface layers 21 and 22 on the amorphous resin layer 1.

When the surfaces of the amorphous resin layer 1 are still too softened to apply an adhesive thereon, the apparatus may be so designed that the resin films supplied from the rolled film sources to form the surface layers 21 and 22 are brought into contact with the adhesive application roll prior to contact with the amorphous resin layer 1.

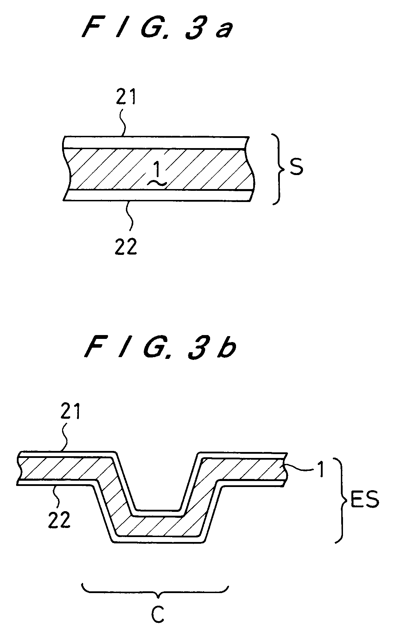

Fig. 3a is a schematic sectional view of a compartmented package forming material S of the invention. In this figure, a surface layer 21 formed from a crystalline resin is laminated on the upper surface of a substrate 1 formed from an amorphous resin, and a surface layer 22 formed from a crystalline resin is laminated on the lower surface of the substrate 1.

Fig. 3b is a schematic sectional view of a compartmented package forming material S of the invention which is provided with a shape C for encasing a content. In this state, the material E is referred to as "material ES". The layer structure of the material ES is the same as that shown in Fig. 3a.

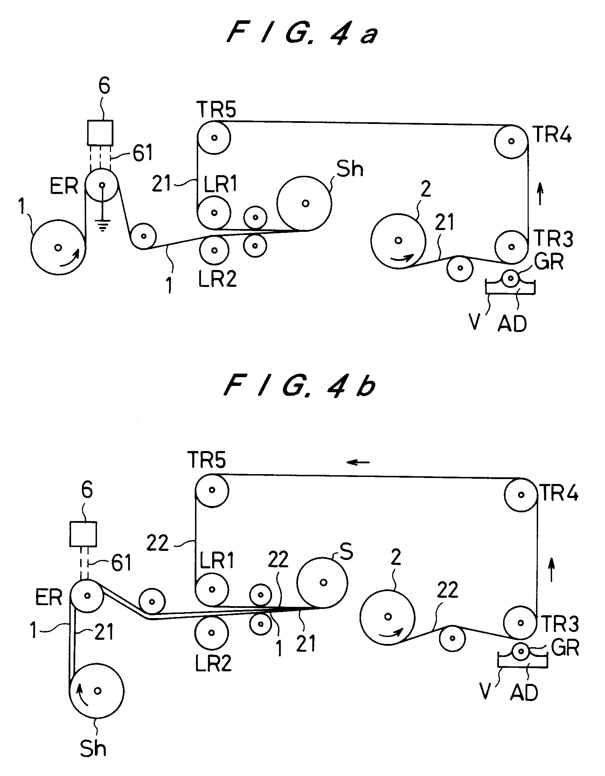

Fig. 4a shows an apparatus for preparing the compartmented package forming material S, in which a means 6 for conducting an activation treatment of an adhesive surface of an amorphous resin layer 1 that is a substrate is incorporated. In the apparatus of the invention for preparing the compartmented package forming material S of the invention, a means for conducting the activation treatment immediately before the surface layers 21 and 22 formed from a crystalline resin are laminated on the surfaces of the substrate 1 is incorporated.

In Fig. 4a, a rolled film 2 composed of a crystalline polypropylene sheet for forming a surface layer 21 (or surface layer 22) is shown on the central lower side, and the sheet 21, namely, an unrolled state of the film 2, is coated with an adhesive AD by means of an adhesive application roll GR at the position where the sheet 21 is contacted with the surface of a turning roll TR3. The adhesive application roll GR is placed in an adhesive bath V. The sheet 21 coated with the adhesive advances upward along the turning roll TR3, then turns left by contacting with a turning roll TR4, and then reached a turning roll TR 5 while drying a solvent contained in the adhesive by keeping at a predetermined temperature for a given period of time. In order to conduct the drying, a solvent evaporation furnace may be provided between TR4 and TR5. The sheet 21 is contacted with the turning roll TR5, then advances downward and turns right by contacting with an upper laminator roll LR1.

On the other hand, the substrate 1, namely, an unrolled state of the film 1 arranged on the left lower side of the apparatus of the invention, runs upward without being subjected to a corona discharge treatment (i.e., typical activation treatment). Then, the substrate turns right by contacting with the upper surface of a grounding roll ER. When the substrate is contacted with the grounding roll ER, it is exposed to corona 61 released toward the grounding roll ER from a corona discharge treatment means 6 (i.e., typical surface activation treatment means) provided above the grounding roll ER, whereby the surface of the substrate is activated.

The thus activated substrate 1 is laminated on the surface layer forming sheet 21 coming down from the upper side while contacting with the upper surface of the lower side laminator roll LR2 positioned on the right side in Fig. 4a, so as to form a single-side laminate sheet Sh comprising the substrate 1 and a surface layer 21 laminated on one surface of the substrate. This sheet Sh is almost free from strong autohesion of the laminated two layers even when the sheet Sh is stored or transferred in the rolled form.

Fig. 4b shows an example of an apparatus for laminating a surface layer 22 on the non-laminated surface of the single-side laminate sheet Sh which has the surface layer 21 on one surface side. Description on the application of an adhesive to the surface layer 22 and on the treatment after the application with reference to Fig. 4b is omitted herein. The steps prior to the laminating are the same as those described with reference to Fig. 4a.

The single-side laminate sheet Sh supplied from the rolled film source arranged on the left lower side in Fig. 4b advances upward with positioning its substrate 1 on the left side, and is exposed to corona 61 released from the corona discharge treatment means 6 provided above the grounding roll ER while contacting with the upper surface of the grounding roll ER. Thus, the surface of the substrate 1 was activated.

The single-side laminate sheet Sh thus activated runs in the right direction with its activated surface facing up while the sheet is contacted with the upper surface of the lower side laminator roll LR2. On the other hand, the surface layer 22 coming down from the upper side turns right by contacting with the upper side laminator roll LR1, whereby the surface with an adhesive faces the sheet Sh. The surface layer 22 and the single-side laminate sheet Sh are pressed by the upper side laminator roll LR1 and the lower side laminator roll LR2 to bond them together, so as to form a compartmented package forming material S of the present invention.

The single-side laminate sheet Sh for constituting the compartmented package forming material S of the invention, which is obtained by the apparatus shown in Fig. 4a, can be per se employed. That is, a compartmented package is prepared by providing a shape C for encasing a content (i.e., pocket) to the compartmented package forming material of the invention, then encasing medicine, etc. in the pocket, and finally sealing the portion C with a lid material, that is, a liner layer.

As materials of the liner layer, an aluminum foil, a tin foil, etc. have been generally used. However, with the increased necessity for separating waste products into combustible ones such as resins and incombustible ones such as metals prior to thermal disposal of the waste products, use of a metal foil liner layer has been reconsidered, and use of a resin liner layer has been studied.

The above-mentioned single-side laminate sheet Sh prepared by the apparatus of the invention is a material which can be favorably employed correspondingly to the use of a resin liner layer. For activating the substrate side surface of the laminate sheet, the apparatus shown in Fig. 4b and the process according to the invention are preferably used. In consideration of preventing the activated surface of the single-side laminate sheet Sh from decrease in the surface energy, the liner layer is bonded to the top surface of the compartmented package forming material of the invention provided with a shape for encasing a content by way of an adhesive, etc.

As the resin liner layer, however, a single layer formed from only an amorphous resin or a single layer formed from an amorphous resin and other resin is generally used. It is important to activate at least one surface of the resin liner layer and the compartmented package forming material 1 provided with a shape for encasing a content immediately before they are laminated together, and by virtue of this surface activation treatment, the adhesion strength between those layers can be increased to a remarkably high level.

### Layer structure and material of the laminate sheet

In the laminate sheet S, a material of the surface layer 21 and a material of the surface layer 22 may be different from each other depending on the use of the laminate sheet. The expression "materials are different from each other" used herein means not only that the materials are polymers entirely different from each other but also that the materials are both crystalline PP but different in the property.

The adhesive and the adhesion method should be determined in such a manner that no delamination (layer separation) would be brought about in the forming process for providing a shape for encasing a content.

The adhesive for bonding the layers can be appropriately selected from adhesive rubbers, adhesive thermoplastic resins, adhesive thermoplastic elastomers, etc., and concretely it can be selected from urethane type adhesives, adhesive olefin polymers (e.g., polymer modified with unsaturated acid), etc. The appropriate selection from those adhesives suits any purpose.

By adopting the above-described layer structure, the aforesaid various problems caused by the single use of the amorphous resin layer can be avoided. The various problems are described again below to make sure of it.

The following problems are those which occur when the PTP packaging of tablets or the like is taken into serious consideration, so that if viewed from other standpoint, there may be a difference with respect to the importance of those problems.
(1) When the amorphous resin is used singly to form a package, this resin is insufficient in surface slippability. This causes an adverse effect that a tablet or the like to be encased does not smoothly enter into the encasing portion.
(2) In the temperature region where the temperature of the molded article exceeds the glass transition temperature (Tg), the shape of the article can be hardly retained. This is a defect given by the fact that the material is amorphous, and this greatly restricts a heating temperature and a period of time for the forming process.

The above problem (1) can be solved by providing layers of a crystalline olefin polymer which is excellent in surface slippability, particularly crystalline polypropylene, as the surface layers of the laminate. That is, a content such as a tablet can enter into the given encasing portion by virtue of the slippability of the surface layer.

The above problem (2) can be solved by that the surface layers of a crystalline olefin polymer restrain distortion of the central core layer. In other words, even if the crystalline polymer is heated to a temperature exceeding the glass transition temperature (Tg), the polymer does not abruptly possess flowability, that is, the crystalline polymer does not lose the shape sustainability, and hence the layers of the crystalline polymer function to support, from the upper and lower sides, the amorphous resin layer which is apt to be distorted abruptly.

The thickness of the crystalline olefin polymer layer, usually the thickness of a crystalline propylene polymer layer, is restricted to a relatively narrow range when the package forming material of the invention is used for PTP of medicines or medicaments. The reason is as follows. There are two requests that the crystalline propylene polymer surface layers exert the above-mentioned distortion restraining function and that the high transparency of the amorphous resin layer is not deteriorated in the practical use, and these two requests must be well balanced.

When the crystalline propylene polymer is substantially a homopolymer of propylene and the melt flow rate (MFR) is in the range of 1 to 20 g/10 min, an allowable thickness of the crystalline propylene polymer layer is generally within the range of 15 to 50 µm, preferably 25 to 40 µm. If the thickness thereof is extremely lower than the lower limit of the above range, an ability for keeping the shape of the laminate becomes insufficient, though the influence on the transparency may be ignored. On the other hand, if the thickness thereof is extremely higher than the upper limit of the above range, the transparency is seriously lowered, though the ability for keeping the shape of the laminate is good.

However, the acceptable range of a thickness of the crystalline olefin polymer layer might be widened or narrowed and transferred to the lower temperature side or the higher temperature side, depending on various factors such as the kind of the olefin monomer constituting the crystalline olefin polymer, combination of the monomers in the case of a copolymer, crystallinity of the (co)polymer, etc.

Further, in the total thickness of the laminate which can be controlled by the crystalline propylene polymer layer, the thickness of the crystalline propylene polymer layer is limited to the specific upper bound as described above. As a matter of course, accordingly, the total thickness of the laminate has the upper limit. After all, it can be said that the thickness of the AMCEC layer has the upper limit. The upper limit of the total thickness of the laminate is about 400 µm, preferably about 350 µm, in the common use.

The lower limit of the thickness of the amorphous resin layer depends on the expected functions of the package forming material according to the invention. When the package forming material is used for PTP of high moisture resistance and high transparency, the lower limit of the thickness of the amorphous resin layer is most severely restricted. It is difficult to ensure both the moisture resistance and the transparency, so that the region where those properties are well balanced is relatively narrowed. As a result, the lower limit of the thickness of the amorphous resin layer is about 110 µm.

However, the package forming material can be applied not only to a use of medicine package but also to other various package uses. According to the aimed use, properties and their values required for the package forming material of the invention vary, and hence various modifications and embodiments are available.

### Conditions for activation treatment of adhesive surface

The corona discharge treatment, which is a typical example of the activation treatment for providing hydrophilic properties to the substrate surface of the compartmented package forming material of the invention, is required to be carried out immediately before the surface layer is laminated on the substrate. This timing consideration is very important for the purpose of preventing the substrate surface having been activated from the decrease in the surface energy with time and preventing the substrate having been surface treated from being again rolled for an accidental discontinuance of work.

The adhesive strength of the surface having been activation treated is reduced with time. The reduction was examined based on the surface energy, and as a result, the energy was reduced from 50 mN/m of the initial value to 40 mN/m after 200 hours, and the adhesive strength was reduced from 1200 g/15 mm to 500 g/15 mm.

As a matter of course, an adhesive surface of the crystalline olefin resin layer can be subjected to the corona discharge treatment, and thereby bonding of the layers can be much more strengthened.

The corona discharge treatment of the substrate surface can be carried out by a corona discharge treatment means. In this means, the voltage difference and the physical one between the discharge electrodes is set within the range of usually 5 to 22 kV, preferably about 20 kV while the latter is set about 1 ∼ 5 mm, respectively; and the phase velocity at which the layer to be treated passes through an activation zone from the first electrode to the last ranging totally about 50 mm is set within the range of usually 50 to 350 cm/sec, preferably 100 to 300 cm/sec.

By virtue of this treatment, the surface energy of the treated surface can be increased to usually 40 to 55 m/Nm, preferably 45 to 50 m/Nm, whereby a high adhesive force can be given to the laminate in the subsequent laminating stage.

The device for conducting the corona discharge treatment which shows excellent performance in the practical use is a multi-stage electrode device. An example of such device is Softal (trade name) available from SOFTAL ELECTRONIC GmbH (Germany).

As the means for activating an adhesive surface of the amorphous resin central core layer and/or an adhesive surface of the surface layer in the process for preparing a laminate sheet for constituting the compartmented package forming material of the invention, other various means than the corona discharge treatment means can be also employed. For example, there can be mentioned an electron ray (cathode ray) irradiation means, a flame treatment means, an ozone treatment means and a γ-ray treatment means.

In the laminate sheet for preparing the compartmented package (PTP) forming material, an abrupt fluidization (decrease of viscosity) of the amorphous resin for forming the central core layer, which is brought about at a temperature higher than the glass transition temperature (Tg), can be effectively restrained by the crystalline resin layers laminated on both surfaces of the central core layer.

Even when the substrate layer formed from the amorphous resin is rolled or folded after the corona discharge treatment and before the bonding to the surface layer, the autohesion phenomenon, namely, a phenomenon of firmly adhering of two layers laminated one upon another, which hinders the unrolling or unfolding work, can be effectively restrained.

### EXAMPLE

A process for preparing the compartmented package forming material of the invention is described below. Further, PTP prepared by hermetically bonding a top surface (surface having no protrusions for receiving a content) of the obtained compartmented package forming material with an aluminum foil (thickness: 20 µm) as a lid was evaluated on various physical properties, and the results are shown later.

The compartmented package forming material was evaluated by determining an acceptable range of a temperature for the forming process, a surface slippability of the formed article and bleed-out of the additive from the formed article, and PTP obtained by adhesion of the package forming material with the aluminum foil (liner layer) was evaluated by examining moisture resistance, transparency, impact resistance, portionability and easiness in taking out of the content.

### Example 1 [Reference]

An amorphous polycyclic ethylene copolymer (AMCEC) having the following property values was extruded into a single-layer sheet (thickness: 190 µm) by means of an extruder (temperature of the extruder: 230 °C). Onto each surface of the sheet is adhered a film (thickness: 30 µm) made from a crystalline PP resin having the following property values at a temperature of 70 °C by way of the following urethane adhesive, to prepare a laminate sheet (total thickness: 250 µm, thickness of the AMCEC layer: 190 µm) of the invention.

### Amorphous polycyclic ethylene copolymer

Intrinsic viscosity [η]: 0.5 dl/g (measured in a decahydronaphthalene solution at 135 °C)
Crystallinity: 0 % (measured by X-ray diffractometry)
Glass transition temperature (Tg): usually 84 °C
Heat distortion temperature: usually 84 °C (ASTM D648)
Refractive index (D²⁰_{D}): 1.40

### Crystalline PP

Melting point: 159 °C (measured by a differential scanning calorimeter (DSC))
Melt flow rate (MFR): 4 g/10 min (measured at 230 °C under a load of 2.16 kgf)

### Urethane adhesive

Trade name: Takelac (available from Takeda Chemical Industries, Ltd.)

### [Provision of shape for encasing content]

The laminate sheet obtained in the above was subjected to vacuum forming at a surface temperature of 130 °C (measured by an infrared thermometer) to shape the laminate sheet so as to have 10 of column-like portions (diameter: 9 mm, height: 5 mm) for receiving tablets (diameter: 8 mm, maximum thickness: 4 mm) at lengthwise and crosswise regular intervals (distance between the centers of two adjacent column-like portions: 15 mm).

### [Preparation of PTP]

On a top surface (surface with no protrusion) of the laminate sheet provided with the shape for receiving a content, an aluminum foil (thickness: 20 µm) was placed as a liner layer. The aluminum foil is one having been subjected to low temperature fusible resin coating, and the aluminum foil was placed on the laminate sheet in such a manner that the surface coated with this resin faced the laminate sheet. Then, the laminate sheet and the aluminum foil were fusion bonded together at a temperature of 220 °C to seal the shaped portions, so as to prepare PTP. Subsequently, water vapor permeability (moisture resistance) into the shaped portions, transparency, impact resistance, portionability and easiness in taking out of the content were examined. The results of the measurement of PTP are set forth in Table 1.

### Comparative Examples 1 - 4

In each of Comparative Examples 1 to 4, a single layer sheet (thickness: 300 µm) made from the following resin was used in place of the package forming material of Example 1. That is, in Comparative Example 1, the procedure of Example 1 was repeated except for replacing the package forming material with an AMCEC single layer sheet; in Comparative Example 2, the procedure of Example 1 was repeated except for replacing the package forming material with a PVC single layer sheet; in Comparative Example 3, the procedure of Example 1 was repeated except for replacing the package forming material with a PP single layer sheet; and in Comparative Example 4, the procedure of Example 1 was repeated except for replacing the package forming material with a PE single layer sheet. The obtained PTP's were measured on transparency, formability, impact resistance, portionability and surface slippability. The results are set forth in Table 1.

### Example 2

Using the same substrate and the same surface layer as those of Reference Example 1, an adhesive surface of the substrate was subjected to an activation treatment by the corona discharge treatment means shown in Fig. 4a.
potential difference between electrodes: 18 kV
difference between electrodes: 1.5 mm
electrode length: 100 cm

The surface energy of the substrate surface having been activation treated was 5o mN/m immediately after the treatment.

The substrate thus activation treated was fed to the device shown in Fig. 1 to obtain a compartmented package forming material of 3-layer laminate consisting of the substrate and layers (each thickness: 30 µm) of crystalline polypropylene resin [MFR (230 °C, 2.16 kgf): 4 g/10 min, melting point (Tm): 159 °C] laminated on both surfaces of the substrate.

The adhesive force between layers of the compartmented package forming material was 1200 gf/15 mm.

Then, the compartmented package forming material was fed to the device shown in Fig. 4b to emboss it, so as to provide a shape for encasing a content. Thereafter, the plane area of the top surface of the embossed sheet was subjected to an activation treatment by the corona discharge treatment means shown in Fig. 4b under the same conditions as described above, and then fed to the subsequent laminating stage.

On the embossed sheet, an aluminum foil (thickness: 20 µm) coated with a crystalline polypropylene resin [MFR (230 °C, 2.16 kgf): 30 g/10 min; ethylene content: 4 molar %; melting point (Tm): 138 °C] was laminated as a liner layer at a temperature of 210 °C. The property values of the obtained PTP are set forth in Table 1.

### Example 3

Using the same substrate layer as that of Reference Example 1 and using a surface layer of a propylene homopolymer [MFR (230 °C, 2.16 kgf): 4 g/10 min; melting point (Tm): 159 °C], an adhesive surface of the substrate and that of the central core of the liner were respectively subjected to an activation treatment by the corona discharge treatment means shown in Fig. 4a.
voltage difference between electrodes: 20 kV
distance between electrodes: same as in Example 2
electrode length: 100 cm

The surface energy of the substrate surface and that of the central core of the liner layer having been activation treated were 45 mN/m immediately after the treatment.

The substrate thus activation treated was fed to the device shown in Fig. 1 to obtain a compartmented package forming material of 3-layer laminate consisting of the substrate and layers (each thickness: 30 µm) of crystalline polypropylene resin [MFR (230 °C, 2.16 kgf): 4 g/10 min, melting point (Tm): 159 °C] laminated on both surfaces of the substrate.

The adhesive force between layers of the compartmented package forming material was 800 gf/15 mm.

Then, the compartmented package forming material was fed to the device shown in Fig. 4b to emboss it, so as to provide a shape for encasing a content. Thereafter, the plane area of the top surface of the embossed sheet was subjected to an activation treatment by the corona discharge treatment means shown in Fig. 4b under the same conditions as described above, and then fed to the subsequent laminating stage.

On the embossed sheet, an AMCEC sheet described below (thickness: 15 µm) coated with a crystalline polypropylene resin [MFR (230 °C, 2.16 kgf): 30 g/10 min; ethylene content: 4 molar % melting point (Tm): 138 °C] was laminated as a liner layer at a temperature of 210 °C. The property values of the obtained PTP are set forth in Table 1.

### Amorphous polycyclic ethylene copolymer

Crystallinity: 0 % (measured by X-ray diffractometry)
Heat distortion temperature: usually 125 °C (ASTM D648)
Refractive index (D²⁰_{D}): 1.41
Elongation at break: 3 %

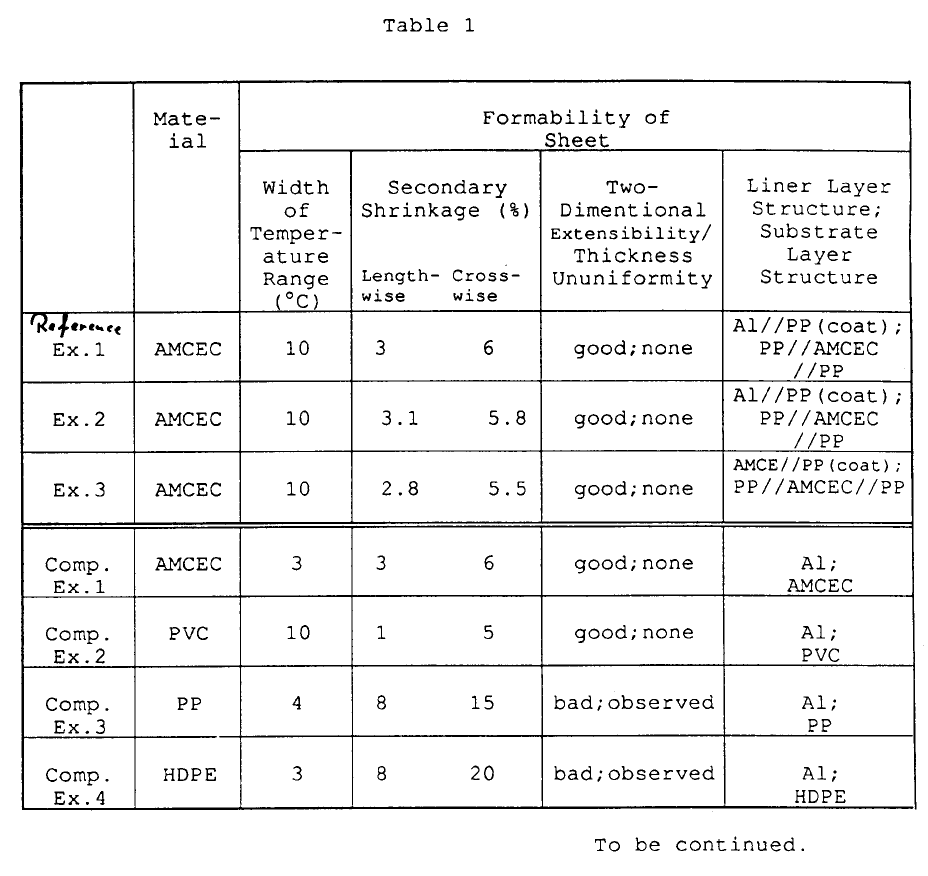

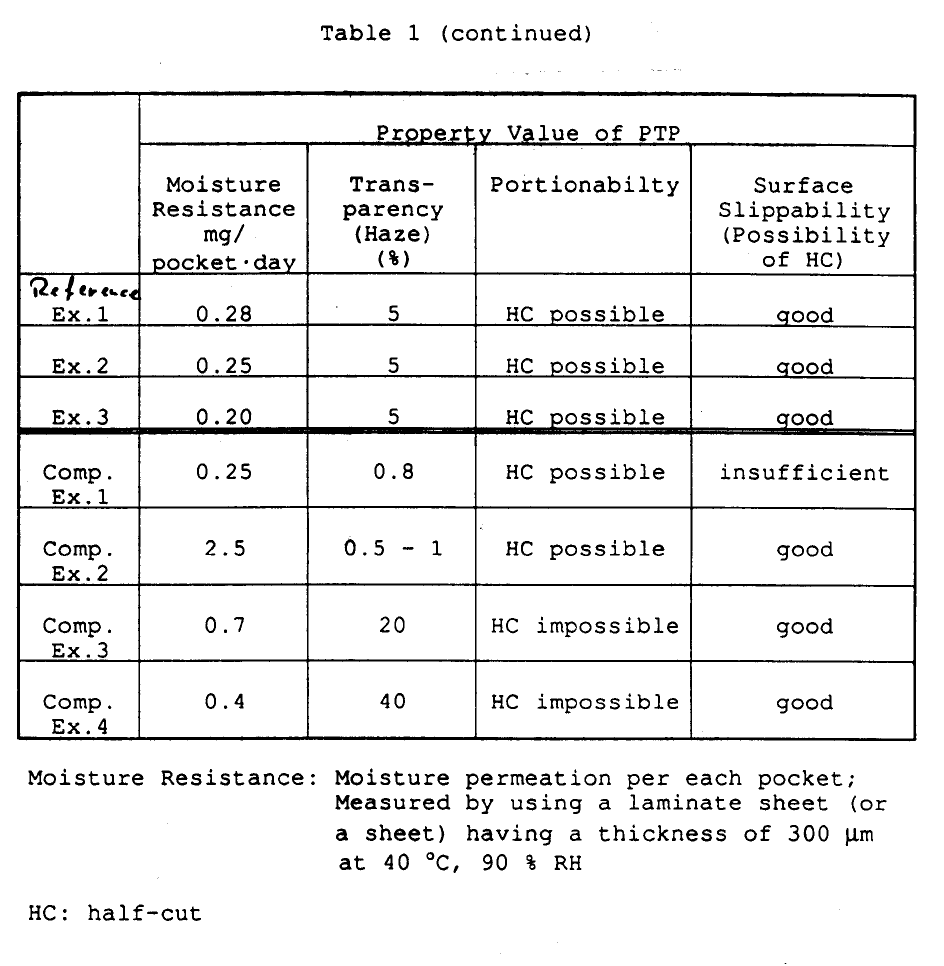

As is evident from the results set forth in Table 1, the compartmented package forming material of the present invention (i.e., laminate sheet comprising an AMCEC layer as a central core layer and crystalline PP surface layers provided on both surfaces of the AMCEC layer and having a shape for receiving a content) and the PTP formed therefrom are prominently excellent in any of the property values as compared with those obtained in the comparative examples.

In addition to those, the PTP obtained from another AMCEC coated with the polypropylene used in the surface layer of the substrate showed even more excellent in those properties.

### EFFECT OF THE INVENTION

The effects of the present invention are as follows.
1. The package forming material of the invention can be subjected to a forming process without any problem even by using such a forming machine as designed to mould and shape PVC.
2. The compartmented package forming material according to the invention with a shape for receiving a content not only keeps excellent properties inherently belonging to the amorphous resin for constituting the central core layer, such as high moisture resistance, high transparency, rigidity, impact resistance, portionability and easiness in taking out of the content, but also has surface slippability inherently belonging to the crystalline PO, particularly PP.
3. The aforementioned laminate sheet exerts excellent thermoformability required for the compartmented package forming material according to the invention. That is, the laminate sheet can be subjected to thermoforming within an extremely widened temperature range (width of temperature range: about 10 °C) as compared with the forming temperature range acceptable for the amorphous resin single layer sheet (width of temperature range: about 3 - 4 °C).
4. When the laminate sheet is subjected to vacuum forming and/or compressed air forming to provide thereto a shape for receiving a content, nonuniformity of wall thickness of the shaped portion (e.g., column-like portion) hardly takes place, that is, such a phenomenon as the thickness of the shaped portion is made smaller than that of other portion hardly takes place.
5. The compartmented package forming material according to the invention resists a contact with a heating roll (4 m/min) at 210 °C in the heat sealing stage.
6. The PTP having been subjected to a corona discharge treatment on both the substrate surface and the top surface of the compartmented package forming material obtained from the substrate shows an adhesive force of 1200 gf/15 mm between the liner layer and the compartmented package forming material layer.

### [Modified embodiments of the invention]

The compartmented package forming material according to the invention is described hereinbefore mainly with respect to the use for PTP. However, its use is by no means limited to PTP and it can be used widely. Other uses and properties required for those uses are described below.

In the case where low temperature impact resistance is particularly required though transparency does not need to be taken into account so much, a crystalline ethylene polymer is preferably used as the crystalline resin for constituting the surface layer. Of various crystalline ethylene polymers, an ethylene polymer produced by radical polymerization is preferably selected when flexibility is desired, while an ethylene polymer produced by coordination catalyst polymerization is preferably selected when rigidity is desired. The flexible ethylene polymer particularly has high transparency as compared with other ethylene polymers, while the rigid ethylene polymer particularly has high heat distortion resistance (namely, it shows a high heat distortion temperature) as compared with other ethylene polymers. If these facts are taken into consideration, much more proper selection is possible.

In the case where high transparency and a high heat distortion temperature are particularly desired though high moisture resistance is not required, a crystalline 4-methyl-1-pentene resin is preferably used as the crystalline resin for constituting the surface layer. This resin is prominently excellent in the transparency and the heat resistance among various crystalline olefin polymers, and further it resists actions of strong reagents such as acid and alkali.

## Claims

1. A compartmented package forming material composed of a laminate sheet, which comprises a substrate layer of an amorphous resin containing an aliphatic condensed polycyclic structure in its molecular chain, and crystalline olefin resin layers laminated on both surfaces of the substrate via an adhesive, and which is provided with a shape for encasing contents, wherein each of the crystalline olefin resin layers constituting the laminate sheet has a thickness of 15 to 50 µm, and the laminate sheet has a total thickness of 100 to 400 µm, and wherein the package forming material is obtainable by laminating the crystalline olefin resin layers on both surfaces of the substrate, at least one of a substrate surface and a crystalline olefin resin layer surface being subjected to surface activation treatment immediately before the laminating stage.

2. A compartmented package forming material according to Claim 1, wherein the low crystalline or amorphous resin for forming the substrate contains a cycloalkane ring whose constituent atoms form a molecular chain of the resin.

3. A compartmented package forming material according to Claim 1 or Claim 2, wherein the shape for encasing a content is selected from a column-like shape, a square pillar-like shape, a hemispherical shape and a prismoid shape.

4. A compartmented package forming material according to any of Claims 1 to 3, wherein the crystalline olefin resin is a 1-olefin polymer.

5. A compartmented package forming material according to any of Claims 1 to 4, wherein the crystalline olefin resin is at least one polymer selected from an ethylene polymer, a propylene polymer, a 1-butene polymer and a 4-methyl-1-pentene polymer.

6. A process for preparing a compartmented package forming material as defined in Claim 1, comprising laminating the crystalline olefin resin layers on both surfaces of the substrate resin layer via an adhesive, wherein at least one of a substrate layer surface and a crystalline olefin resin layer surface is subjected to a surface activation treatment immediately before the laminating stage.

7. A process for preparing a compartmented package forming material according to Claim 6 in which both the substrate surface and the crystalline olefin resin layer surface to be bonded to the substrate surface are subjected to a surface activation treatment immediately before the laminating stage.

8. A process for preparing a compartmented package forming laminate, comprising subjecting:
(a) the top surface of a laminate sheet as defined in Claim 1, which sheet is provided with a shape for encasing contents, and/or
(b) a surface of a polymer layer for forming a liner layer,
to a surface activation treatment immediately before laminating the laminate sheet to the polymer layer.

9. A process according to any of Claims 6 to 8, wherein the surface activation treatment is at least one treatment selected from a corona discharge treatment, an electron ray (cathode ray) irradiation treatment, other high-energy rays irradiation treatment and a flame treatment.

10. A process for preparing a compartmented package forming laminate according to Claim 8 or Claim 9, wherein the liner layer is formed from an amorphous resin layer containing at least a ring structure.

11. A compartmented package forming laminate comprising a compartmented package forming material as defined in any of Claims 1 to 5 and at least one liner layer for sealing contents encased in the compartmented package forming material.

12. A compartmented package forming laminate according to Claim 11, wherein the liner layer is formed from an amorphous resin layer containing at least a ring structure.

## Patentansprüche

1. Ein Material zum Formen einer unterteilten Verpackung, das aus einer Laminatfolie zusammengesetzt ist, welche eine Substratschicht aus einem amorphen Harz, das eine aliphatische kondensierte polyzyklische Struktur in seiner Molekularkette enthält, und kristalline Olefinharzschichten umfaßt, die auf beide Oberflächen des Substrats mit einem Klebstoff laminiert sind, und welches mit einer Form zum Umgeben eines Inhalts versehen ist, worin jede der kristallinen Olefinharzschichten, die die Laminatfolie bilden, eine Dicke von 15 bis 50 µm aufweist, und die Laminatfolie eine Gesamtdicke von 100 bis 400 µm aufweist, und worin das verpackungsbildende Material durch Laminieren der kristallinen Olefinharzschichten auf beide Oberflächen des Substrats erhältlich ist, wobei mindestens eine Oberfläche ausgewählt aus einer Substratoberfläche und einer Oberfläche der kristallinen Olefinharzschicht einer Oberflächenaktivierungsbehandlung direkt vor der Laminierungsstufe unterzogen wird.

2. Material zum Formen einer unterteilten Verpackung gemäß Anspruch 1, worin das nieder-kristalline oder amorphe Harz zum Bilden des Substrats einen Cycloalkanring enthält, dessen Bauatome eine molekulare Kette des Harzes bilden.

3. Material zum Formen einer unterteilten Verpackung gemäß Anspruch 1 oder Anspruch 2, worin man die Form zum Umgeben des Inhalts auswählt aus einer säulenartigen Form, einer quadratstützenartigen Form, einer halbkugelförmigen Form und einer prismoiden Form.

4. Material zum Formen einer unterteilten Verpackung gemäß einem der Ansprüche 1 bis 3, worin das kristalline Olefinharz ein 1-Olefinpolymer ist.

5. Material zum Formen einer unterteilten Verpackung gemäß einem der Ansprüche 1 bis 4, worin das kristalline Olefinharz mindestens ein Polymer, ausgewählt aus einem Ethylenpolymer, einem Propylenpolymer, einem 1-Butenpolymer und einem 4-Methyl-1-Pentenpolymer ist.

6. Verfahren zur Herstellung eines Materials zum Formen einer unterteilten Verpackung, wie es in Anspruch 1 definiert ist, welches das Laminieren der kristallinen Olefinharzschichten auf beide Oberflächen der Substratharzschicht mittels eines Klebstoffs umfaßt, worin mindestens eine Oberfläche ausgewählt aus einer Substratschichtoberfläche und einer Oberfläche der kristallinen Olefinharzschicht einer Oberflächenaktivierungsbehandlung direkt vor der Laminierungsstufe unterzogen wird.

7. Verfahren zur Herstellung eines Materials zum Formen einer unterteilten Verpackung gemäß Anspruch 6, worin man sowohl die Substratoberfläche als auch die an die Substratoberfläche zu bindende Oberfläche der kristallinen Olefinharzschicht einer Oberflächenaktivierungsbehandlung direkt vor der Laminierungsstufe unterzieht.

8. Verfahren zur Herstellung eines Laminats zum Formen einer unterteilten Verpackung, welches das Unterziehen:
(a) der oberen Oberfläche der in Anspruch 1 definierten Laminatfolie, wobei diese Folie mit einer Form zum Umgeben eines Inhalts versehen ist, und/oder
(b) einer Oberfläche einer Polymerschicht zum Formen einer Liner-Schicht,
einer Oberflächenaktivierungsbehandlung direkt vor dem Laminieren der Laminatfolie auf die Polymerschicht umfaßt.

9. Verfahren gemäß einem der Ansprüche 6 bis 8, worin die Oberflächenaktivierungsbehandlung mindestens eine Behandlung ausgewählt aus einer Korona-Entladungsbehandlung, einer Elektronenstrahlen-(Kathodenstrahlen-) Strahlungsbehandlung, einer anderen Hochenergiestrahlen-Strahlungsbehandlung und einer Flammbehandlung ist.

10. Verfahren zum Herstellen eines Laminats zum Formen einer unterteilten Verpackung gemäß Anspruch 8 oder 9, worin die Liner-Schicht aus einer amorphen Harzschicht, die mindestens eine Ringstruktur enthält, gebildet wird.

11. Laminat zum Formen einer unterteilten Verpackung, welches ein Material zum Formen einer unterteilten Verpackung, wie es in einem der Ansprüche 1 bis 5 definiert ist, und mindestens eine Liner-Schicht zum Versiegeln des von dem Material zum Formen einer unterteilten Verpackung umgebenen Inhalts umfaßt.

12. Laminat zum Formen einer unterteilten Verpackung gemäß Anspruch 11, worin die Liner-Schicht aus einer amorphen Harzschicht, die mindestens eine Ringstruktur enthält, gebildet wird.

## Revendications

1. Matériau pour la formation d'un emballage compartimenté composé d'une feuille stratifiée, laquelle comprend une couche de substrat réalisée avec une résine amorphe contenant dans sa chaîne moléculaire une structure polycyclique aliphatique condensée, et des couches de résine d'oléfine cristalline stratifiées sur les deux surfaces du substrat au moyen d'une colle, et laquelle est pourvue d'une forme pour mettre en boîtier des contenus, où chacune des couches de résine d'oléfine cristalline constituant la feuille stratifiée a une épaisseur allant de 15 à 50 µm, et la feuille stratifiée a une épaisseur totale allant de 100 à 400 µm, et où le matériau pour la formation d'un emballage peut être obtenu en stratifiant les couches de résine d'oléfine cristalline sur les deux surfaces du substrat, au moins une surface de substrat ou une surface de couche d'oléfine cristalline étant soumise à un traitement d'activation de surface immédiatement avant l'étape de stratification.

2. Matériau pour la formation d'un emballage compartimenté selon la revendication 1, dans lequel la résine amorphe ou faiblement cristalline destinée à former le substrat contient un composé cyclique de cycloalkane dont les atomes constituants forment une chaîne moléculaire de la résine.

3. Matériau pour la formation d'un emballage compartimenté selon la revendication 1 ou la revendication 2, dans lequel la forme destinée à mettre en boîtier un contenu est sélectionnée parmi une forme similaire à une colonne, une forme carrée similaire à un pilier, une forme hémisphérique et une forme de prisme.

4. Matériau pour la formation d'un emballage compartimenté selon l'une quelconque des revendications 1 à 3, dans lequel la résine d'oléfine cristalline est un polymère de 1-oléfine.

5. Matériau pour la formation d'un emballage compartimenté selon l'une quelconque des revendications 1 à 4, dans lequel la résine d'oléfine cristalline est au moins un polymère sélectionné parmi un polymère d'éthylène, un polymère de polypropylène, un polymère de 1-butène, et un polymère de 4-méthyle-1-pentène.

6. Procédé destiné à la préparation d'un matériau pour la formation d'un emballage compartimenté selon la revendication 1, comprenant la stratification des couches de résine d'oléfine cristalline sur les deux surfaces de la couche de résine de substrat au moyen d'une colle, dans lequel au moins une surface de couche de substrat ou une surface de couche de résine d'oléfine cristalline est soumise à un traitement d'activation de surface immédiatement avant l'étape de stratification.

7. Procédé destiné à la préparation d'un matériau pour la formation d'un emballage compartimenté selon la revendication 6, dans lequel la surface de substrat et la surface de la couche de résine d'oléfine cristalline devant être liée à la surface de substrat sont soumises toutes deux à un traitement d'activation de surface immédiatement avant l'étape de stratification.

8. Procédé destiné à la préparation d'un stratifié pour la formation d'un emballage compartimenté comprenant la soumission :
(a) de la surface supérieure d'une feuille stratifiée selon la revendication 1, laquelle feuille est pourvue d'une forme pour la mise en boîtier de contenus, et/ou
(b) d'une surface d'une couche de polymère destinée à la formation d'une couche de revêtement,
à un traitement d'activation de surface immédiatement avant la stratification de la feuille stratifiée pour obtenir la couche de polymère.

9. Procédé selon l'une quelconque des revendications de 6 à 8, dans lequel le traitement d'activation de surface est au moins un traitement sélectionné parmi un traitement de décharge à effet Corona, un traitement par irradiation de rayons électroniques (rayons cathodiques), un autre traitement d'irradiation par des rayons à énergie élevée et un traitement à la flamme.

10. Procédé destiné à la préparation d'un stratifié pour la formation d'un emballage compartimenté selon la revendication 8 ou la revendication 9, dans lequel la couche de revêtement est formée à partir d'une couche de résine amorphe contenant au moins une structure de composé cyclique.

11. Stratifié pour la formation d'un emballage compartimenté comprenant un matériau pour la formation d'un emballage compartimenté selon l'une quelconque des revendications 1 à 5 et au moins une couche du revêtement destinée à l'étanchéité des contenus mis en boîtier dans le matériau pour la formation d'un emballage compartimenté.

12. Stratifié pour la formation d'un emballage compartimenté selon la revendication 11, dans lequel la couche de revêtement est formée à partir d'une couche de résine amorphe contenant au moins une structure de composé cyclique.
